# EUROPÄISCHE PATENTSCHRIFT

(11) **EP 0 597 293 B1**
(45) Veröffentlichungstag und Bekanntmachung des Hinweises auf die Patenterteilung: **10.02.1999**
(21) Anmeldenummer: 93117034.4
(22) Anmeldetag: 21.10.1993
(51) Int. Cl.: G11B 5/704

(54) **Flexible magnetische Aufzeichnungsträger mit Rückschicht**
Flexible magnetic recording carrier with back layer
Support flexible d'enregistrement magnétique ayant une couche arrière

(30) Priorität: 12.11.1992 DE 4238174
(43) Veröffentlichungstag der Anmeldung: 18.05.1994
(73) Patentinhaber: EMTEC Magnetics GmbH, 67059 Ludwigshafen (DE)
(72) Erfinder: Bobrich, Michael, Dr., D-67459 Boehl-Iggelheim (DE); Brodt, Gregor, Dr., D-64646 Heppenheim (DE); Roller, Hermann, D-67071 Ludwigshafen (DE)

(56) Entgegenhaltungen:
- DE-A- 4 128 816
- PATENT ABSTRACTS OF JAPAN vol. 11, no. 256 (P-607)20. August 1987 & JP-A-62 062 422 (SONY CORPORATION) 19. März 1987

## Beschreibung

Die Erfindung betrifft flexible magnetische Aufzeichnungstrager, im wesentlichen bestehend aus einem bahnförmigen unmagnetischen Substrat, insbesondere in Film-Form, einer auf einer Hauptseite des bahnförmigen Substrats aufgebrachten Magnetschicht und einer auf der gegenüberliegenden Hauptseite des Substrats aus einem polymeren Bindemittel und nichtmagnetischen Füllstoffen und Stützpigmenten gebildeten Rückschicht.

Es ist bekannt, flexible magnetische Aufzeichnungsträger mit nicht magnetisierbaren, nicht leitfähigen und/oder leitfähigen Stoffen enthaltenden Rückschichten zu versehen.

In der US-A 3 293 066 wird beschrieben, daß elektrostatische Aufladungen von Magnetbändern, die sich bei Aufzeichnungsgeraten mit hohen Bandgeschwindigkeiten bilden können, durch Aufbringen leitfähiger Rückschichten beseitigt und außerdem durch Rückschichten die Bandrückseiten verschleißfester gemacht werden kannen. Es ist ferner aus der GB-A 1 197 661 und der US-A 4 135 031 bekannt, durch Aufbringen von Rückschichten mit einer vorgegebenen Oberflächenrauhigkeit die Wickeleigenschaften von Magnetbändern zu verbessern. Auch für Magnetkarten sind solche Rückschichten bekannt. Aus der EP-A 101 020 sind spezielle Bindemittelmischungen bekannt, welche insbesondere unter Zusatz von Ruß Rückschichten mit ausgezeichneter Haft-, Verschleiß- und Klimafestigkeit erbringen.

Von besonderer Wichtigkeit sind derartige Rückschichten bei Videobändern, speziell bei solchen für den Heimvideobereich. So wird u.a. in der US-A 4 735 325 zur Verbesserung der Kratzfestigkeit und zur Reduzierung der Fehlerzahl eine Rückschicht vorgeschlagen, welche aus Ruß unterschiedlicher Teilchengröße sowie aus Füllstoffen mit einer Mohshärte ≥ 8, dispergiert in einem polymeren Bindemittel, besteht. Neben einer Verbesserung der Verschleißfestigkeit und einer Verringerung der Abrasivitat dienen die vorgeschlagenen Rückschichten auch zur Verminderung der Lichtdurchlässigkeit des Bandmaterials, was insbesondere bei der Benutzung derartiger Bänder auf handelsüblichen Videorecordern erforderlich ist. Hierzu wird in der EP-A 105 471 eine Rückschicht auf Basis Bariumsulfat/α-Eisen-(III)-Oxid mit oder ohne besonderen Rußzusätzen vorgeschlagen.

In der DE-A 41 17 980 werden transparente Rückschichten für magnetische Aufzeichnungsträger bereitgestellt, die sowohl im Hinblick auf die mechanischen Eigenschaften, wie Verschleißfestigkeit und Abrasivität, den Anforderungen genügen als auch gleichzeitig eine ausreichende Lichtdurchlässigkeit aufweisen, so daß ein entsprechendes magnetisches Aufzeichnungsmedium auch für das Thermoduplizier-(TDM)-Verfahren einsetzbar ist.

Die DE-A 42 16 847 hat die Stabilisierung von Rückgußdispersionen mittels Phosphatgruppen enthaltenden Polyurethanen zum Inhalt, welche in schnellaufenden Rührwerksmühlen hergestellt werden. Derartige Bindemittel sind jedoch wegen ihrer Polarität feuchtigkeitsempfindlich. Dies kann sich beispielsweise in einer Fehlerzunahme der Bänder bei Lagerung im Feucht-/Wärmeklime äußern. Gemindert werden kann die Situation durch Zumischen anderer gebräuchlicher Polymere. Dennoch ist der Zustand insgesamt unbefriedigend. Auch die Verwendung von mit Trialkoxisilanen ausgerüsteten und damit hydrophobierten SiO₂- und Al₂O₃-Produkten führte zu keinen signifikanten Verbesserungen.

Die DE-A 4128816 betrifft magnetische Aufzeichnungsmedien, die in der Rückschicht des nichtmagnetischen Trägers ein wärmehärtbares und ein photohärtbares Harz enthalten, wobei letzteres ein Polyurethanmethacrylat sein kann.

Aufgabe der vorliegenden Erfindung war es deshalb, eine Rückschicht bereitzustellen, die bei gleicher Stabilität der Dispersion während des Herstellungsprozesses ein verbessertes Klimaverhalten aufweist.

Überraschend wurde nun gefunden, daß sich diese Aufgabe lösen läßt, wenn die Bindemittelmatrix der Rückschicht neben üblichen Polymeren ein Polyurethanharnstoff(meth)acrylat enthält, das erhalten wird durch Umsetzung eines Poly(meth)acrylats mit bis zu 2 OH-Endgruppen pro Mol und einem Molekulargewicht zwischen 200 und 50 000 mit einem Gemisch aus aliphatischen Polyisocyanaten mit einer mittleren Funktionalität von 3,0 bis 6 NCO-Gruppen pro Mol, bestehend aus
0,1 bis 10 Gew.-% eines Diisocyanats,
20 bis 80 Gew.-% eines Triisocyanats und
20 bis 60 Gew.-% eines Isocyanats mit einer Funktionalität von 4 bis 10,
mit der Maßgabe, daß pro OH-Gruppe 1,2 bis 3,0 NCO-Gruppen zur Reaktion eingesetzt werden und die restlichen NCO-Gruppen mit Aminoalkyltrialkoxisilanen in substituierte Harnstoffgruppen überführt werden.

In einer bevorzugten Ausgestaltung der erfindungsgemäßen magnetischen Aufzeichnungsträger wird das im Bindemittelgemisch der Rückschicht enthaltene Polyurethanharnstoff(meth)acrylat durch die Umsetzung eines Poly(meth)acrylats mit bis zu 2 OH-Endgruppen pro Mol und einem Molekulargewicht von insbesondere 400 bis 4000 mit dem genannten Gemisch aus aliphatischen Polyisocyanaten mit einer mittleren Funktionalität von 3,5 bis 5,5 NCO-Gruppen pro Mol erhalten, mit der Maßgabe, daß pro OH-Gruppe 1,5 bis 2,5 NCO-Gruppen zur Reaktion gelangen. Hierzu eignet sich insbesondere ein Gemisch, das aus
0,3 bis 8 Gew.-% eines Diisocyanats,
30 bis 70 Gew.-% eines Triisocyanats und
20 bis 50 Gew.-% eines Isocyanats mit einer Funktionalität von 4 bis 10
zusammengesetzt wird.

Das für die Herstellung des Polyurethanharnstoff(meth)acrylats herangezogene Poly(meth)acrylat ist aufgebaut aus Veresterungsprodukten aus (Meth)acrylsäure und einer Alkoholkomponente mit einem C₁- bis C₂₅-Alkylrest und 0 bis 2,5 % von einem Hydroxyalkyl(meth)acrylat mit einem C₁- bis C₂₅-Alkylrest. Geeignete Alkylreste sind beispielweise Methyl, Ethyl, Propyl, Butyl, Isopropyl, tert.-Butyl, Pentyl, Nonyl oder Stearyl. Geeignete Hydroxyalkyl(meth)acrylate sind u.a. Ethandiolmonoacrylat, Propandiolmonoacrylat.

Des weiteren ist es auch vorteilhaft, bei der Polymerisation die OH-Gruppen an den Kettenenden über OH-gruppenhaltige Polymerisationsinitiatoren, wie z.B. Hydroxyperoxide, oder OH-gruppenhaltige Regler, wie z.B. Mercaptoethanol, einzuführen.

Bei der Herstellung des Poly(meth)acrylats lassen sich auch andere bekannte Vinylmonomere einbauen, wie beispielsweise Vinylbenzol, Vinylchlorid, Vinylacetat, Vinylpropionat, Acrylamid, Acrylnitril.

Geeignete Isocyanate sind aliphatische Isocyanate und deren Umsetzungsprodukte zu höhermolekularen Polyisocyanaten, wie sie durch Addition von Di-, Tri- und evtl. Polyolen mit aliphatischen Diisocyanaten, bzw. durch Biuretisierung oder Cyanuratbildung, entstehen. Geeignete aliphatische Diisocyanate hierfür sind z.B. Hexamethylendiisocyanat oder Isophorondiisocyanat.

Die erfindungsgemäß einzusetzenden Polyurethanharnstoff(meth)-acrylate, die aus den beschriebenen Bausteinen aufgebaut sind, sollen für ein gutes Aufteilungsverhalten und hohe Dispersionsstabilität eine breite Molekulargewichtsverteilung aufweisen. Das Molekulargewicht beträgt zwischen 200 und 50 000, bevorzugt 500 bis 40 000 (gemessen nach GPC) mit einem mittleren MG (Gewichtsmittel) von 1000 bis 10 000, insbesondere 2000 bis 8000 und bevorzugt 4000 bis 7000.

Das erfindungsgemäß einzusetzende Polyurethanharnstoff(meth)acrylat weist vorteilhafterweise eine Pendelhärte nach DIN 53 157 von 20 bis 130 s, ferner einen E-Modul (Elastizutätsmodul gemäß DIN 53 457) im Bereich von 500 bis 2500 N/mm², eine Reißdehnung größer 70 % (DIN 53 455) und eine Reißfestigkeit zwischen 25 und 70 N/mm² (DIN 53 455) auf. Besonders günstig ist eine Pendelhärte von 25 bis 125 s, ein E-Modul von 600 bis 2000, eine Reißdehnung von 80 bis 500 % und eine Reißfestigkeit von 25 bis 50 N/mm².

Das in der Rückschicht der erfindungsgemäßen Aufzeichnungsträger enthaltene Polyurethanharnstoff(meth)acrylat wird nicht allein eingesetzt, sondern wird zu Erzielung optimaler Eigenschaften mit weiteren an und für sich bekannten Bindemitteln abgemischt. Dabei beträgt der Anteil des Polyurethanharnstoff(meth)acrylats in der Bindemittelmatrix 5 bis 55, vorzugsweise 10 bis 30 Gew.-%. Bei den in der Bindemittelmischung enthaltenen Polymere handelt es sich im allgemeinen um in üblichen Lösungsmitteln lösliche Polyvinylformale, Polyurethanelastomere, Mischungen von Polyisocyanaten und höhermolekularen Polyhydroxylverbindungen, Nitrocellulosen, lineare gesättigte Polyesterharze aus Terephthal-, Isophthalsäure und Ethylenglykol, Vinylchloridpolymerisate mit über 60 % an Vinylchlorid-Molekülbausteinen, Vinylchlorid-Copolymerisate mit einer oder mehreren ungesättigten Carbonsäuren mit 3 bis 5 C-Atomen als Comonomeren oder hydroxylgruppenhaltige Vinylchlorid-Copolymerisate, die durch partielle Verseifung von Vinylchlorid-Vinylester-Copolymerisaten oder direkte Copolymerisation von Vinylchlorid mit hydroxylhaltigen Monomeren, wie Allylalkohol oder 4-Hydroxybutyl- oder 2-Hydroxyethyl(meth)-acrylat, hergestellt werden können. Ferner sind als Bindemittel geeignet Abmischungen von einem oder mehreren Polyurethanelastomeren mit Polyvinylformalen, Phenoxyharzen, linearen gesättigten Polyesterharzen und Vinylchlorid-Copolymerisaten der oben angegebenen Zusammensetzung. Als organische Polymere werden insbesondere Abmischungen von Polyurethanelastomeren mit Phenoxyharzen, Polyurethanelastomeren mit Polyvinylformalen, Polyesterurethane mit Vinylchloridpolymerisaten bzw. lineraren Polyesterharzen sowie niedermolekularen OH-gruppenhaltigen Polyharnstoffurethanen bevorzugt.

Als Lösungsmittel für die Herstellung und Verarbeitung der Polymeren werden vorzugsweise cyclische Ether, wie Tetrahydrofuran und Dioxan, und Ketone, wie Methylethylketon oder Cyclohexanon, verwendet. Selbstverständlich können die Polymeren auch in anderen stark polaren Lösungsmitteln, wie Dimethylformamid, Pyrrolidon, Dimethylsulfoxid oder Ethylglykolacetat, gelost werden. Ebenso ist es möglich, die genannten Lösungsmittel mit Aromaten, wie Toluol oder Xylol, und Estern, wie Ethyl- oder Butylacetat, zu mischen.

Als Füllstoffe und Pigmente eignen sich gleichfalls bekannte Produkte, wie Kieselsäure, als sogenannte pyrogene oder Fällungskieselsäure, Kalziumcarbonat, Bariumsulfat mit einer mittleren Agglomeratgröße von 0,05 bis 4 µm. Geeignete Stützpigmente sind teilchenförmige Verbindungen aus der Gruppe Aluminiumoxid, α-Eisen-(III)-oxid, Titandioxid, Zinkferrit und/oder Chromgrün mit einer mittleren Agglomeratgröße von 0,1 bis 0,5 µm. Kugelförmiges Polyolefin kann ebenso mitverwendet werden wie Ruß bis zu einer Pigment-Volumenkonzentration von 30 %.

Bevorzugt eingesetzt wird jedoch eine Mischung von Kieselsäure mit Zinkferrit, Kieselsäure mit Al₂O₃, Kieselsäure mit Zinkferrit und geringen Mengen eines leitfähigen Furnace Rußes sowie Al₂O₃ allein.

Zur Dispergierung werden die Komponenten zusammen mit den gelösten organischen Polymeren allein oder mit an und für sich bekannten und üblichen Dispergierhilfsmitteln, wie Sojalecithin, gesättigten und ungesättigten, geradkettigen und verzweigten Fettsäuren usw. verarbeitet. Bevorzugt wird ohne bzw. nur mit geringen Dispergierhilfsmittelmengen gearbeitet. Gegebenenfalls werden zur Verbesserung der Reibungseigenschaften übliche Gleitmittel, wie Fettsäureester, Silikonöle oder Additive auf Fluorbasis, zugesetzt.

Die Dispergierung erfolgt in vertikalen oder horizontalen Rührwerkskugelmühlen. Die Rückschicht wird bevorzugt mit dem Rasterwalzenverfahren aufgebracht. Zur Verdampfung der Lösungsmittel und Trocknung bzw. Härtung der Rückschicht wird diese durch einen Wärmekanal geführt. Dabei ist es möglich, sowohl Magnet- und Rückschichtdispersion in einem Arbeitsgang als auch hintereinander aufzutragen. Die beschichteten Folien können noch, falls erforderlich, auf üblichen Maschinen durch Hindurchführen zwischen geheizten und polierten Walzen, ggf. bei Anwendung von Druck, geglättet und verdichtet werden. Die Dicke der Rückschicht beträgt weniger als 5,5, insbesondere weniger als 2,5 und vorzugsweise 0,2 bis 1 µm.

In einer vorteilhaften Ausführung der erfindungsgemäßen magnetischen Aufzeichnungsträger ist die Rückschicht zusammengesetzt aus 2,5 bis 25, insbesondere 5 bis 20 Gew.-% eines Polyurethanharnstoff(meth)acrylats, aufgebaut aus einem OH-gruppenhaltigen Acrylat mit einem mittleren Molekulargewicht von 5000 und einem Biuretpolyisocyanat mit einer mittleren Funktionalitat von 3,8, bestehend aus 0,5 % Diisocyanat, 60 % Triisocyanat und dem Rest Polyisocyanat mit einer mittleren Funktionalitat von 4,8, wobei die restlichen NCO-Gruppen am Kettenende durch Aminoalkylentrialkoxisilane in substituierte Harnstoffe überführt werden, 5 bis 30, vorzugsweise 10 bis 20 Gew.-% eines lineraren Polyesterurethans aus Adipinsäure, 1,4-Butandiol und 4,4-Diisocyanatdiphenylmethan, 5 bis 30, vorzugsweise 15 bis 30 Gew.-% eines Polyphenoxyharzes aus Bisphenol A und Epichlorhydrin, 5 bis 25, insbesondere 10 bis 20 Gew.-% eines Polyisocyanatharzes, 15 bis 60, vorzugsweise 20 bis 40 Gew.-% einer Fällungskieselsäure mit einem SiO₂-Gehalt von 98 bis 99,5 %, einem pH-Wert von 5 bis 7 sowie einer Dichte von 1,9 g/cm³, 4,5 bis 15, insbesondere 6 bis 12 Gew.-% eines kubischen Zinkferrits mit einer mittleren Teilchengröße von 0,1 bis 0,5 µm, eines kugelförmigen α-Fe₂O₃ oder eines Al₂O₃ und 1 bis 5, vorzugsweise 1,5 bis 3 Gew.-% eines kugelförmigen ld-Polyolefins. Neben den 0,5 Gew.-% nicht übersteigenden Mengen eines bekannten Dispergierhilfsmittels sowie eines Gleitmittels kann es gegebenenfalls zweckmäßig sein, einen Teil der Füllstoffe bzw. Stützsubstanzen durch Ruß zu ersetzen.

Die erfindungsgemäßen magnetischen Aufzeichnungsträger zeichnen sich gegenüber solchen nach dem Stand der Technik durch eine gesteigerte Temperatur- und Feuchtefestigkeit aus, was auf die Verankerung des beanspruchten Polyurethanharnstoff(meth)acrylats auf die Pigmentoberflachen zurückzuführen ist. Außerdem sind die Rückschichten der erfindungsgemäßen magnetischen Aufzeichnungsträger für IR-Strahlung der Wellenlänge zwischen 0,5 und 1,8 µm lichtdurchlässig.

Die Erfindung sei anhand folgender Beispiele im Vergleich zu Versuchen nach dem Stand der Technik näher erläutert. Die in den Beispielen und Vergleichsversuchen genannten Teile und Prozente beziehen sich, soweit nichts anderes angegeben ist, auf das Gewicht.

### Beispiel A

In einem beheizbaren Reaktionsgefäß von 100 000 Volumenteilen Inhalt, ausgerüstet mit Rührer und Rückflußkühler, werden 17 482 Teile Tetrahydrofuran zum Sieden erhitzt. Innerhalb von 2 Stunden wird eine Mischung von 15 903 Teilen Methylmethacrylat, 15 903 Teilen n-Butyl-methacrylat, 403 Teilen Mercaptoethanol und 80 Teilen Azo-bis(iso-butyronitril) zudosiert. Nach einer Rührzeit von 30 min wird innerhalb weiterer 2 h eine Mischung von 132 Teilen Azo-bis(iso-butyronitril) und 257 Teilen Mercaptoethanol gelöst in 1 532 Teilen Tetrahydrofuran zugegeben. Nach 2 h wird eine Mischung von 3 384 Teilen Tetrahydrofuran, 24 Teilen Hexamethylendiisocyanat, 2 909 Teilen Biuret des Hexamethylendiisocyanates und 1 430 Teilen eines Polyisocyanates mit der mittleren Funktionalität 4,8 innerhalb von 15 min zugegeben. Nach einer Rührzeit von 30 min werden 200 Teile Dibutylzinndilaurat pro 1 000 000 Teile der Gesamtmenge zugegeben. Nach 1 h werden 2 572 Teile 3-Tri-methoxysilylpropylamin und 15 079 Teile Tetrahydrofuran zugegeben. Der K-Wert des Polymeren beträgt ca. 20, gemessen in 1 %iger Lösung in Dimethylformamid.

### Beispiel 1

In eine diskontinuierliche Rührwerksmühle mit einem Volumen von 10 000 Teilen wurden 12 500 Teile Zirkondioxidkugeln mit einem Durchmesser von 1,0 bis 1,25 mm, 50 Teile einer 50 %igen Lösung des Polyurethanharnstoff(meth)acrylats, hergestellt gemäß Beispiel A, 86 Teile einer 20 %igen Lösung eines Polyphenoxyharzes aus Bisphenol A und Epichlorhydrin mit 6 Gew.-% Hydroxylgruppen in einem Gemisch aus gleichen Teilen Tetrahydrofuran und Dioxan, 109 Teile einer 13 %igen Lösung eines linearen Polyesterurethans, hergestellt aus Adipinsäure, Butandiol-1,4 und 4,4-Diisocyanatodiphenylmethan in einem Gemisch aus gleichen Teilen Tetrahydrofuran und Dioxan, 0,85 Teile einer isomeren C₁₈-Carbonsaure, 734,4 Teile eines Gemisches aus gleichen Teilen Tetrahydrofurn und Dioxan, 136 Teile einer Fällungskieselsäure mit einer mittleren Agglomeratgröße von 3 µm, 34 Teile eines kubischen Zinkferrits mit einer mittleren Teilchengröße von 0,12 µm, 8,5 Teile eines Polyolefins mit einem mittleren Molekulargewicht von 3000 und einem mittleren kugelförmigen Teilchendurchmesser von 500 µm eingefüllt. Dann wurde die Rührwerksmühle verschlossen und der Inhalt 6 Stunden dispergiert. Zur Überprüfung des Dispergierfortschritts wurde die Mühle wieder geöffnet und eine Probe entnommen. Nachdem diese in Ordnung war, wurden noch 350 Teile der 20 %igen Lösung des Polyphenoxyharzes, 443 Teile der 13 %igen Lösung des linearen Polyesterurethans, 10 Teile einer 10 %igen Lösung von Dibutylzinndilaurat in einem Gemisch aus gleichen Teilen Tetrahydrofuran und Dioxan, 4 Teile einer 10 %igen Lösung eines Fluoradditivs in einem Gemisch aus gleichen Teilen Tetra) hydrofuran und Dioxan sowie 2000 Teile des Gemisches aus Tetrahydrofuran und Dioxan eingefüllt und weitere 3 Stunden gemahlen.

Die Dispersion wurde dann der Mühle entnommen und geteilt. Der eine Teil wurde zur Messung der Dispersionsstabilität, der zweite und größere Teil zum Beschichten verwendet.

Die Messung der Dispersionsstabilität wurde wie folgt durchgeführt: Glasflaschen mit 100, 150 oder 250 ml Inhalt wurden etwa zu 2/3 mit der zu untersuchenden Dispersion aufgefüllt und nach Verschließen der Flaschen auf ein Rollbrett gelegt. Nach einer bzw. 24 Stunden wurden die Flaschen wieder geöffnet und jeweils ein Handaufstrich mit einem Handrakel auf einer sehr glatten, 75 µm dicken Polyethylenterephthalatfolie mit einem Rz-Wert von 40 bis 50 nm hergestellt. Von diesen wurden die Glanzwerte mit Hilfe eines Glanzmeßgerätes ermittelt und mit den Werten der frisch gefertigten Dispersion, von der vor der Rollbrettlagerung gleichfalls ein Handaufstrich gezogen wurde, verglichen. Bei stabilen Dispersionen wurden keine bzw. nur geringe Abweichungen gegenüber dem Ausgangswert gefunden, bei instabilen zum Teil in erheblichem Ausmaß.

Der Test erlaubt eine Aussage darüber, ob eine Dispersion während des Verarbeitungsprozesses, beispielsweise während des Rührens und Filtrierens, homogen bleibt oder durch Flokkulation und Reagglomeration inhomogen wird, mit allen sich daraus ergebenden Nachteilen für die Magnetschicht.

Die Ergebnisse der Stabilitätsprüfung sind in der Tabelle 1 aufgeführt.

Der zweite Teil der Dispersion wurde wie folgt weiterverarbeitet: Die Dispersion wurde filtriert und unmittelbar vor dem Auftragen mittels einer Rasterwalze auf eine 15 µm Polyethylenterephthalatfolie, unter Rühren mit, bezogen auf 1000 Teile Dispersion, 36 Teilen einer 50 %igen Lösung eines Triisocyanats aus 3 Mol Toluylendiisocyanat und 1 Mol Trimethylolpropan, versehen. Im gleichen Arbeitsgang wurde die der Rückschicht gegenüberliegende Seite mit einer Videomagnetschicht versehen. Die beidseitig beschichtete Folie wurde im Wärmekanal bei Temperaturen zwischen 50°C und 100°C getrocknet und durch Hindurchführen zwischen beheizten Walzen unter Druck geglättet. Die Schichtdicken betrugen für die Rückschicht 0,4 µm und für die Magnetschicht 2,2 µm. Die anschließend in 1/2" breite Bänder aufgeschnittenen Folienbahnen wurden zur Prüfung der Klimastabilität auf verschiedene Methoden geprüft:

### Methode 1 gemäß MIL-T-21029A unter nachstehenden Bedingungen:

Ein 90 cm langes Bandstück wurde durch ein angehängtes Gewicht unter einem Wickelzug von 9,81 N auf einen Wickeldorn mit einem Durchmesser von 12,7 mm gespult und das Bandende mit einem doppelseitig beschichteten schmalen Klebeband befestigt. Der auf diese Weise präparierte Wickel wurde einem Wärme-Feuchtigkeitszyklus ausgesetzt.

### Zyklusablauf:

a) 16 bis 18 Stunden bei 54,5°C und 85 ± 5 % RF und 4 Stunden bei 54,5°C und 5 % RF, anschließend bei Raumtemperatur lagern.
b) Verschärfte Form, wie a) aber bei 76°C

Das Band ist klimastabil, wenn sich nach Öffnen des Klebebandes die ersten Bandlagen selbständig lösen. Bei nicht klimafesten Bändern wird ein Verkleben der Rückschicht mit der Magnetschicht beobachtet.

Die Ergebnisse sind in der Tabelle 2 angegeben.

### Methode 2:

Von einem 1/2"-Videoband wurden 7 Tage nach der Herstellung die Fehlerzahlen gemessen und aufnotiert, dann wurde das Band 7 Tage lang folgendem Zyklusablauf ausgesetzt und anschließend erneut vermessen:
12 Stunden bei 5°C und 80 % RF
12 Stunden bei 50°C und 80 % RF

Die Ergebnisse sind in der Tabelle 3 angegeben.

### Beispiel 2

In diesem Beispiel wurde gegenüber Beispiel 1 die Menge des Polyurethanharnstoff(meth)acrylats verdoppelt, so daß der Anteil in der Bindemittelmatrix 20 % betrug. Die Verarbeitung und Prüfung erfolgte wie in Beispiel 1 angegeben. Die Ergebnisse sind in den Tabellen 1, 2 und 3 aufgeführt.

### Beispiel 3

In diesem Beispiel wurde gegenüber Beispiel 1 der Anteil des Polyurethanharnstoff(meth)acrylats in der Bindemittelmatrix auf 30 % erhöht. Verarbeitung und Prüfung erfolgte wie in Beispiel 1 angegeben. Die Ergebnisse sind gleichfalls in den Tabellen 1, 2 und 3 aufgeführt.

### Beispiel 4

In diesem Beispiel wurde das in den Beispielen 1 und 3 eingesetzte kubische Zinkferrit durch ein α-Al₂O₃ mit einer mittleren Teilchengröße von 0,1 bis 0,2 µm ausgetauscht. Es wurde das in Beispiel 2 angegebene Bindemittelsystem verwendet. Die Ergebnisse sind in den Tabellen 1, 2 und 3 aufgeführt.

### Beispiel 5

In diesem Beispiel wurden neben dem Polyurethan-harnstoff(meth) acrylat, das in der Bindemittelmatrix in einer Konzentration von 20 % vorlag, ein Polyurethanharnstoffharz gemäß EP 099 533 sowie ein Polyvinylformalharz als Bindemittelkomponenten verwendet. Anstelle der in Beispiel 1 genannten Pigmente wurde ausschließlich Al₂O₃ eingesetzt. Die PVK betrug 46 %. Die Verarbeitung und Prüfung erfolgte wie in Beispiel 1 angegeben. Die Ergebnisse sind gleichfalls in den Tabellen 1, 2 und 3 aufgeführt.

### Vergleichsbeispiel 1

In eine diskontinuierliche Rührwerksmühle mit einem Volumen von 10 000 Teilen wurden 12 500 Teile Zirkondioxidkugeln mit einem Durchmesser von 1,0 bis 1,25 mm, 68,3 Teile einer 15 %igen Lösung eines Polyurethan auf Polyester-Polyether-MDI-Basis mit einem mittleren Molekulargewicht von 70 000 und einem Phosphatgehalt von 40 m Äquivalent/kg Produkt und einer Adsorption von 0,08 mg/m², auf einer Fällungskieselsäure mit einer mittleren Sekundärteilchengröße von 3 µm in einem Gemisch aus 42,5 Teilen Tetrahydrofuran und 42,5 Teilen Dioxan, 80,7 Teile einer 20 %igen Lösung eines Polyphenoxyharzes aus Bisphenol A und Epichlorhydrin mit 6 Gew.-% Hydroxylgruppen in einem Gemisch aus 40 Teilen Tetrahydrofuran und 40 Teilen Dioxan, 124 Teile einer 13 %igen Lösung eines linearen Polyesterurethanharzes, hergestellt aus Adipinsäure, 1,4-Butandiol und 4,4'-Diisocyanatodiphenylmethan in einem Gemisch aus 43,5 Teilen Tetrahydrofuran und 43,5 Teilen Dioxan, 3,4 Teile einer isomeren C₁₈-Carbonsaure, 624 Teile eines Gemisches aus gleichen Teilen Tetrahydrofuran und Dioxan, 136,7 Teile der genannten Fällungskieselsäure, 34,2 Teile eines kubischen Zinkferrits mit einer mittleren Teilchengröße von 0,12 µm, 8,5 Teile eines Polyolefins mit einem mittleren Molekulargewicht von 3 000 und einem mittleren kugelförmigen Teilchendurchmesser von 500 µm, eingefüllt. Dann wurde die Rührwerksmühle verschlossen und der Inhalt 6 Stunden dispergiert. Danach wurde die Mühle wieder geöffnet und noch 68,3 Teile einer 15 %igen Lösung des zuvor beschriebenen Polyurethans in einem Gemisch aus 42,5 Teilen Tetrahydrofuran und 42,5 Teilen Dioxan, 355 Teile einer 20 %igen Lösung des zuvor beschriebenen Polyphenoxyharzes in einem Gemisch aus 40 Teilen Tetrahydrofuran und 40 Teilen Dioxan, 14,87 Teile einer 10 %igen Lösung von Dibutylzinndilaurat in einem Gemisch aus 45 Teilen Tetrahydrofuran und 45 Teilen Dioxan, 6,9 Teile einer 10 %igen Lösung eines Fluoradditives in einem Gemisch aus 45 Teilen Tetrahydrofuran und 45 Teilen Dioxan, 428 Teile einer 13 %igen Lösung des zuvor beschriebenen linearen Polyesterurethanharzes in einem Gemisch aus 43,5 Teilen Tetrahydrofuran und 43,5 Teilen Dioxan, 2 095 Teile eines Gemisches aus gleichen Teilen Tetrahydrofuran und Dioxan, eingefüllt und weitere 3 Stunden gemahlen. Die Dispersion wurde wie in Beispiel 1 angegeben weiterverarbeitet und geprüft mit dem Unterschied, daß auf 1 000 Teile der Dispersion 38 Teile der 50 %igen Lösung des Isocyanatharzes zugesetzt wurden.

Die Ergebnisse sind in den Tabellen 1, 2 und 3 aufgeführt.

### Vergleichsbeispiel 2

In diesem Vergleichsbeispiel wurde die im Vergleichsbeispiel 1 angegebene Fällungskieselsäure durch eine pyrogene, mit Trialkoxisilan ausgerüstete, Kieselsäure ersetzt. Die übrigen Parameter blieben unverändert. Die Ergebnisse sind in den Tabellen 1, 2 und 3 aufgeführt.

### Vergleichsbeispiel 3

Für den Vergleichsversuch wurde ein herkömmliches Polyesterurethan eingesetzt, bei dem keine Adsoprtion auf der Oberfläche der Fällungskieselsäure erfolgte.

In eine diskontinuierliche Rührwerksmühle mit einem Volumen von 10 000 Teilen wurden 3 325 Teile Zirkondioxidkugeln mit einem Durchmesser von 1,0 bis 1,25 mm, 136 Teile einer Fällungskieselsäure mit einer mittleren Agglomeratgröße von 3 µm, 34 Teile eines kubischen Zinkferrits mit einer mittleren Teilchengröße von 0,12 µm, 8,5 Teile eines Polyolefins mit einem mittleren Molekulargewicht von 3 000 und einem mittleren kugelförmigen Teilchendurchmesser von 500 µm, 107,5 Teile einer 20 %igen Lösung eines Vinylchloridcopolymeren mit einem mittleren Molekulargewicht von 35 000 und einem Hydroxylgehalt von 1,8 Gew.-% in einem Gemisch aus 40 Teilen Tetrahydrofuran und 40 Teilen Dioxan, 160 Teile einer 13 %igen Lösung eines linearen Polyesterurethanharzes, hergestellt aus Adipinsäure, 1,4-Butandiol und 4,4'-Diisocyanatodiphenylmethan in einem Gemisch aus 43,5 Teilen Tetrahydrofuran und 43,5 Teilen Dioxan, 2,5 Teile einer isomeren C₁₈-Carbonsäure, 810 Teile eines Gemisches aus gleichen Teilen Tetrahydrofuran und Dioxan, eingefüllt. Dann wurde die Rührwerksmühle verschlossen und der Inhalt 6 Stunden dispergiert. Danach wurde die Mühle wieder geöffnet und noch 14,8 Teile einer 10 %igen Lösung von Dibutylzinndilaurat in einem Gemisch aus 45 Teilen Tetrahydrofuran und 45 Teile Dioxan, 6 Teile einer 10 %igen Lösung eines Fluoradditives in einem Gemisch aus 45 Teilen Tetrahydrofuran und 45 Teilen Dioxan, 740 Teile einer 13 %igen Lösung des zuvor beschriebenen linearen Polyesterurethanharzes in einem Gemisch aus 43,5 Teilen Tetrahydrofuran und 43,5 Teilen Dioxan, 433 Teile einer 20 %igen Lösung des zuvor beschriebenen Vinylcopolymeren in einem Gemisch aus 40 Teilen Tetrahydrofuran und 40 Teilen Dioxan, 1 725 Teile eines Gemisches aus gleichen Teilen Tetrahydrofuran und Dioxan, eingefüllt und weitere 3 Stunden gemahlen. Die Dispersion wurde wie in Beispiel 1 angegeben weiterverarbeitet und geprüft, jedoch mit dem Unterschied, daß zu 1 000 Teilen der Dispersion 32 Teile der 50 %igen Lösung des Isocyanatharzes zugesetzt wurden.

Die Ergebnisse sind in den Tabellen 1, 2 und 3 aufgeführt.

**Tabelle 1**

| Prüfung der Dispersionsstabilitat-Glanz | | | | | | | | | |
|---|---|---|---|---|---|---|---|---|---|
| Beispiel | 1 | 2 | 3 | 4 | 5 | Vergl. | 1 | 2 | 3 |
| Glanz (60°) | | | | | | | | | |
| Ausgangswert | 56 | 61 | 63 | 52 | 40 | | 51 | 55 | 58 |
| N 1 h Rollbrett | 62 | 59 | 62 | 53 | 40 | | 51 | 54 | 51 |
| N 24 h Rollbrett | 54 | 60 | 64 | 52 | 41 | | 51 | 55 | 8 |

**Tabelle 2**

| Prüfung der Klimastabilität-MIL-T-21029A/Methode 1 | | | | | | | | | |
|---|---|---|---|---|---|---|---|---|---|
| Beispiel | 1 | 2 | 3 | 4 | 5 | Vergl. | 1 | 2 | 3 |
| a) | i.0. | i.0. | i.0. | i.0. | i.0. | | i.0. | i.0. | i.0. |
| b) | i.0. | i.0. | i.0. | i.0. | i.0. | | vk | vk | vk |
| vk = verklebt | | | | | | | | | |

**Tabelle 3**

| 7 Tage Lagertest(Fehler)-Methode 2 | | | | | | | | | |
|---|---|---|---|---|---|---|---|---|---|
| Beispiel | 1 | 2 | 3 | 4 | 5 | Vergl. | 1 | 2 | 3 |
| Fehler vor Lagerung | 6 | 5 | 7 | 4 | 4 | | 4 | 3 | 25 |
| Fehler nach Lagerung | 7 | 5 | 6 | 5 | 4 | | 10 | 9 | 30 |

## Patentansprüche

1. Magnetische Aufzeichnungsträger, bestehend aus einem unmagnetischen flexiblen Trägermaterial mit einer auf der einen Seite des Trägermaterials aufgebrachten Magnetschicht aus in einem organischen Bindemittel feinverteiltem magnetischem Material sowie einer auf der der Magnetschicht gegenüberliegenden Seite des Trägermaterials befindlichen Rückschicht, bestehend aus in einem Bindemittel feinverteilten nichtmagentisierbaren Feststoffen, dadurch gekennzeichnet, daß die Bindemittelmatrix der Rückschicht neben üblichen Polymeren ein Polyurethanharnstoff(meth)acrylat enthält, das erhalten wird durch Umsetzung eines Poly(meth)acrylats mit bis zu 2 OH-Endgruppen pro Mol und einem Molekulargewicht zwischen 200 und 50 000 mit einem Gemisch aus aliphatischen Polyisocyanaten mit einer mittleren Funktionalität von 3,0 bis 6 NCO-Gruppen pro Mol, bestehend aus
0,1 bis 10 Gew.-% eines Diisocyanats,
20 bis 80 Gew.-% eines Triisocyanats und
20 bis 60 Gew.-% eines Isocyanats mit einer Funktionalität von 4 bis 10,
mit der Maßgabe, daß pro OH-Gruppe 1,2 bis 3,0 NCO-Gruppen zur Reaktion eingesetzt werden und die restlichen NCO-Gruppen mit Aminoalkyltrialkoxisilanen in substituierte Harnstoffgruppen überführt werden.

2. Magnetische Aufzeichnungsträger nach Anspruch 1, dadurch gekennzeichnet, daß das Gemisch aus aliphatischen Polyisocyanaten eine mittlere Funktionalität von 3,5 bis 5,5 NCO-Gruppen pro Mol aufweist mit der Maßgabe, daß pro OH-Gruppe 1,5 bis 2,5 NCO-Gruppen zur Reaktion eingesetzt werden.

3. Magnetische Aufzeichnungsträger nach Anspruch 1, dadurch gekennzeichnet, daß der Anteil des Polyurethanharnstoff(meth)acrylats in der Bindemittelmatrix 5 bis 55 Gew.-% beträgt.

4. Magnetische Aufzeichnungsträger nach Anspruch 1, dadurch gekennzeichnet, daß die Bindemittelmatrix mit einem Polyisocyanatharz vernetzt wird.

5. Magnetische Aufzeichnungsträger nach Anspruch 1, dadurch gekennzeichnet, daß die nichtmagnetisierbaren Feststoffe Kieselsäureprodukte, Zinkferrit, Al₂O₃, BaSO₄, Ruß sowie Mischungen davon sind.

## Claims

1. A magnetic recording medium, consisting of a nonmagnetic flexible substrate having a magnetic layer applied to one side of the substrate and consisting of magnetic material finely divided in an organic binder, and a backing coating present on that side of the substrate which is opposite the magnetic layer and consisting of nonmagnetizable solids finely distributed in a binder, wherein the binder matrix of the backing coating contains, in addition to conventional polymers, polyurethaneurea (meth)acrylate which is obtained by reacting a poly(meth)acrylate having up to 2 terminal OH groups per mol and a molecular weight of from 200 to 50,000 with a mixture of aliphatic polyisocyanates having an average functionality of from 3.0 to 6 NCO groups per mol, consisting of
from 0.1 to 10% by weight of a diisocyanate,
from 20 to 80% by weight of a triisocyanate and
from 20 to 60% by weight of an isocyanate having a functionality of from 4 to 10,
with the proviso that from 1.2 to 3.0 NCO groups per OH group are used for the reaction and the remaining NCO groups are converted in substituted urea groups with aminoalkyltrialkoxysilanes.

2. A magnetic recording medium as claimed in claim 1, wherein the mixture of aliphatic polyisocyanates has an average functionality of from 3.5 to 5.5 NCO groups per mol, with the proviso that from 1.5 to 2.5 NCO groups per OH group are used for the reaction.

3. A magnetic recording medium as claimed in claim 1, wherein the amount of the polyurethaneurea (meth)-acrylate in the binder matrix is from 5 to 55% by weight.

4. A magnetic recording medium as claimed in claim 1, wherein the binder matrix is crosslinked with a polyisocyanate resin.

5. A magnetic recording medium as claimed in claim 1, wherein the nonmagnetizable solids are silica products, zinc ferrite, Al₂O₃, BaSO₄, carbon black and mixtures thereof.

## Revendications

1. Support d'enregistrement magnétique consistant en une matière de support flexible non magnétique portant sur l'une de ses faces une couche magnétique consistant en une matière magnétique à l'état de fine division dans un liant organique et, sur la face opposée à celle qui porte la couche magnétique, une couche arrière consistant en substances solides non magnétisables à l'état de fine division dans un liant, caractérisé par le fait que la gangue de liant de la couche arrière contient, avec des polymères usuels, un (méth)acrylate de polyuréthanne-urée obtenu par réaction d'un poly-(méth)acrylate contenant jusqu'à deux groupes terminaux OH par molécule et ayant un poids moléculaire de 200 à 50 000 avec un mélange de polyisocyanates aliphatiques à une fonctionnalité moyenne de 3,0 à 6 groupes NCO par molécule, et consistant en
0,1 à 10 % en poids d'un diisocyanate,
20 à 80 % en poids d'un triisocyanate et
20 à 60 % en poids d'un isocyanate de fonctionnalité 4 à 10,
sous réserve que, pour un groupe OH, on a mis en oeuvre dans la réaction 1,2 à 3,0 groupes NCO, les autres groupes NCO étant convertis en groupes urée substitués à l'aide d'aminoalkyltrialcoxysilanes.

2. Support d'enregistrement magnétique selon la revendication 1, caractérisé par le fait que le mélange des polyisocyanates aliphatiques a une fonctionnalité moyenne de 3,5 à 5,5 groupes NCO par molécule, sous réserve que, pour un groupe OH, on a mis en oeuvre dans la réaction 1,5 à 2,5 groupes NCO.

3. Support d'enregistrement magnétique selon la revendication 1, caractérisé par le fait que la proportion du (méth)acrylate de polyuréthanne-urée dans la gangue du liant est de 5 à 55 % en poids.

4. Support d'enregistrement magnétique selon la revendication 1, caractérisé par le fait que la gangue du liant est réticulée par une résine de polyisocyanate.

5. Support d'enregistrement magnétique selon la revendication 1, caractérisé par le fait que les matières solides non magnétisables consistent en silice ou dérivés, ferrite de zinc, Al₂O₃, BaSO₄, noir de carbone ou leurs mélanges.
